# EUROPEAN PATENT APPLICATION

(11) **EP 1 806 500 A1**
(43) Date of publication of application: **11.07.2007**
(21) Application number: 05779163.4
(22) Date of filing: 14.07.2005
(51) Int. Cl.: F03D 3/06, F03D 3/04

(54) **INDUSTRIAL-SCALE WIND-ENERGY-COLLECTION SYSTEM WHICH CAN BE INSTALLED IN THE SEA**

(30) Priority: 14.07.2004 ES 200401716
(71) Applicant: Bernal Curto, Juan Domingo, 24002 Leon (ES); Gonzalez Diaz, Victorino, 45600 Talavera de la Reina (ES)
(72) Inventor: BERNAL CURTO, Juan Domingo, 24002 Leon (ES); GONZALEZ DIAZ, Victorino, E-45600 Talalvera de la Reina (ES)
(74) Representative: Naranjo Marcos, Maria Antonia
(86) International application number: PCT/ES2005/000403
(87) International publication number: WO 2006/018467

(57) **Abstract**

The invention relates to an industrail-scale wind-energy-collection system which can be installed in the sea. The inventive system comprises a main shaft (1) which is raised at the ends by two supports (S). According to the invention, several rigs extend from the aforemetioned shaft, each of said rigs comprising a pair of parallel masts (8) which are connected at the ends thereof by means of a fixing bar or crossbar (5). The resulting parallelogram in each forms the sail surface which is divided into various different sails (6), each being supported by a shaft (7) that can rotate through 90 °.

## Description

### TECHNICAL FIELD

The invention is included within the technical field of wind-energy collection, suitable to correctly function in the marine environment on a mobile platform, for its subsequent transformation into electrical energy.

### STATE OF THE ART

Currently, wind energy is exclusively used via fixed, land wind generators.

The proposed system aims to improve collection efficiency, its installation resting on a floating mobile platform in the sea.

### Drawbacks of the current approach

a) Little output per unit. Although there is no data published on the average load factor we can estimate it to be 18%. We understand load factor to be the expression in percent of the ratio, at a given time, between the real production and the installed power, i.e. in this case, the real production would be 18% of its potential capacity.
   The increase in production is mainly achieved by multiplying the units. The technique may slightly increase the output, improving and increasing the size of the blades. The increase in size has its physical limits which are at the limit, technologically being increasingly more costly and complicated.
b) The minimum wind velocity required is in the order of 4 m/s, which leads to one of its greatest drawbacks: unpredictability. And we should distinguish two types of unpredictability: Production - non-production and within the productive period, variations in said production, which can lead to producing more when it is not necessary. The structure does not allow acting to modify those parameters.
c) The cost of the investment.
d) Environmental impact: visual, clearances and fauna.
e) Fixed and permanent installations, which cannot be transported from the place.
f) The structure does not allow intervening with regard to the wind velocity, modifying it and improving it.
g) The geographic surface covered.

### Conclusions:

Wind energy is inexhaustible, free, ecological and very complementary, which produces a saving in other energies, but this approach does not allow it to pass from the phase of subordination, the comprehensive maintenance of the investments in other energies being essential to guarantee consumption.

Given the technical state of advance wherein the current model is found, significant progress in this energy sector will only be made considering the need for a change in the starting point.

### Problems to resolve:

- Increasing the unit's output.
- Reducing the start-up velocity, reducing the stoppage periods. This would be a first factor in reducing the rate of unpredictability and increasing the load factor.
- Reducing the investment cost, so that the same investment would have a multiplying effect on the production.
- Eliminating the environmental impact, which inevitably places us out at sea. The current wind generator supports two forces, wind force and centrifugal force. Inertia does not exist as they are fixed installations. In the sea, the blades will not withstand this force, which means we should discard it. On the other hand, at sea, the winds are stronger and more constant, a second factor which would allow us to decrease the degree of unpredictability and increase the load factor.
- The installation must be mobile. This would permit positioning the system in the most favourable area, a third factor which would influence the degree of unpredictability and the load factor.
- That we can act, modifying the wind velocity as it passes it through the system. This would be a very important fourth factor for both the aforementioned problems and the uniformity in the production process although the wind strength may vary.

### Objectives:

Autonomy of wind power as energy source. If the problems and drawbacks considered are satisfactorily resolved, wind power will be considered equal to traditional energies, having other very important advantages, which are extremely well known.

The proposed system is based on the same principle of the traditional river waterwheel. This collects the hydraulic power due to the pressure difference arising between the blades which perform the stroke of the lower semicircle of the circumference which they describe on rotating, which is the one immersed below the water level and the recovery stroke which corresponds to the upper semicircle and is performed in the air.

In this case, the system is very simple and effective, but the difference in pressure is caused as two elements of different densities are used. Water causes the power stroke and the recovery movement is produced in the air. As water causes high pressure due to greater density, this is not cancelled out in the recovery stroke as the air offers comparatively zero resistance. Result: 100% of the energy is theoretically used.

This system is not applicable to the wind due to the essential difference that wind is found both in the power stroke, which in this case would be the upper semicircle, and in the recovery stroke, the lower semicircle, which means that the pressure of the element is the same. The pressure difference would be minimum: the forced exerted in one direction would be cancelled out by the force exerted in the opposite direction.

Attempts have been made to solve this problem by increasing the pressure differences using aerodynamic designs, which although useful, do not resolve the problem. A satisfactory solution would have to involve reducing the resistance of the recovery stroke to less than 5%. In this way, 100% of the wind energy acting at any time on the sail surface exposed in the power stroke would be used.

In order to facilitate understanding of this specification, the designs or figures we briefly describe below are attached.

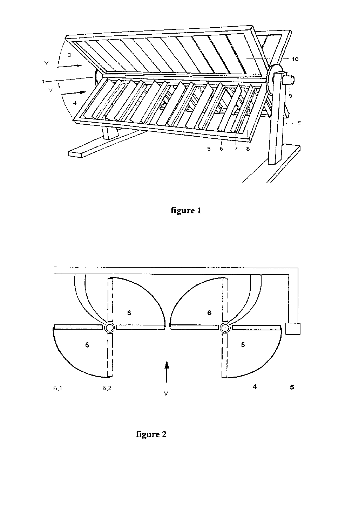

Figure 1. General diagram of the wind water-wheel.
Figure 2. Cross-section of the fixing for the sail shafts.
Figure 3. It illustrates a side view of the system in operation.

The system object of this specification consists of a horizontal shaft (I) with two fixing points at its ends (9) which supports a sail surface (10) of attack of the wind perpendicular to its direction via masts (8) which extend from the shaft (1), with said surface being divided in various sails (6) with their respective shafts (7) with limited rotation capacity.

The horizontal shaft (1) divides the circumference described by the masts (8) on rotation due to the action of the wind (V), in two semicircles, the upper one (3), with the sails perpendicular to the wind, and the lower one (4) in parallel, producing differences in rotation forces of the main shaft (9).

Every time the sails of each rig cross the horizontal, an autonomous mechanism fixed on the fixing bar, which may be electric or with pistons activated by compressed air, makes the sails rotate through 90° alternatively, positioning them perpendicular to the wind or parallel, positions whereby the strokes are performed of the two semicircles, that of attack and recovery, respectively.

The proposed system consists of two supports (5) which raise a shaft (1) by its ends (9) to a minimum height which allows the full rotation of the masts (8). Four rigs are fixed with angles of separation of 90° between one another within the lower part of the shaft and at its ends. Each rig is composed of two parallel masts (8), fixed at the lower end of the shaft, ends which are delimited by the two supports. The resulting figure, viewed laterally, would be of two blades connected at their intersection points to each end of the shaft. The end part of each pair of masts is suitably connected to a fixing bar (5), this being parallel to the shaft. The shaft should rotate on itself with no hindrance with the supports. The figure would be similar to a mill or a waterwheel.

Inside each one of the four parallelograms, formed by the shaft, the fixing bar and the two parallel masts, various independent sails (6) would be fixed that cover the surface of the parallelogram, each one anchored to the shaft (1) and to the fixing bar by a shaft (7), with bearings at its fixing points, which divides them longitudinally in two and which rotates 90° on itself. The number of sails will depend on the length of the shaft and the fixing bar. The width of each sail, which is the information that will give us their number, is determined by manageability during the rotations and by the division of the sail surface which we will see below. Taking these two parameters into consideration, we estimate that the sails will have an approximate optimum width between 0.50 and 0.75 metres. The sails (6) will be paired in twos performing the 90° rotation inversely to compensate the wind forces during the rotation movement so that pressures are eliminated or reduced in a single direction on the masts. This 90° rotation is caused by an autonomous mechanism which may be electric, mechanical or compressed air via pistons, positioned on the fixing bar, outside the surface of each parallelogram covered by the sails. Each 90° rotation produced by the mechanism will be performed in one direction and the following rotation in the opposite direction, recovering with this its initial position, so that successive rotations of 90° will never complete a full rotation of the shaft, i.e. 360°.

Since the system is intended for use on an industrial scale, the measurements have to be relatively large. The shaft (7) whereon each sail rotates has its fixing points at its ends; this means that with industrial measurements, it is necessary to considerably increase its thickness to support the push of the wind and so that vibrations and movements do not occur that make the sails hit one another, especially in their central part. As the diameter of said shaft is reduced, its wind resistance is reduced in the recovery stroke, also gaining in less weight of the system. So that in a 10m sail, according to the example used below, its shaft has less than a 3 cm diameter, we would need to place several fixing points uniformly distributed throughout the shaft. (Figure 2). For this purpose we will position, for example, three support bars (5) in the rear part of the sails according to the attack of the wind (4). These support bars (5) will be fixed to the masts (8) and will be U-shaped. The sails (6) will run through the rear part in transversal direction to their shafts, with sufficient separation so that the sail rotation is not hindered. The sails (6) perform their rotations in two opposite quadrants of 90° each, leaving another two free quadrants. An arm will be fixed to the support bar (5) by the free rotation quadrant of its rear part and will terminate in a bearing which will surround the sail shaft, preventing vibrations and facilitating the rotation. In this way, we have decreased the separation of the support points in the case proposed from 10 m to 2.5 m.

As the fixing bar (5) of each rig passes through the end of the horizontal facing the wind, the rotation mechanism will receive the signal which will be called force signal, performing the rotation that leaves the sails in a position perpendicular to the wind, i.e. covering the entire sail surface. In the case proposed 10 signals will be emitted for the ten mechanisms which will perform the rotation. When it covers half a circumference and is situated at the end of the horizontal (1) positioned in the wind outlet, another 10 signals will emit the recovery signal, (position of the sails in parallel to the wind direction), the mechanism of each sail performing the opposite rotation. It is very important to understand that the signals emitted in the two points are different, indicating to the rotation mechanism that it is situated in one position, not that it rotates indiscriminately, so that if, due to a fault, a mechanism does not collect a signal, the following signal would not produce any effect, since it would order the mechanism to be situated in the position it was already in.

As 10 signals are emitted to activate the 10 mechanisms, we achieve system flexibility. The attack surface of the wind can be reduced gradually from 10 active sails to 1 active sail.

If, when each rig crosses the wind inlet horizontal, we interrupt the signal to all the mechanisms, the shaft will continue rotating (1) not due to the force of the wind but due to centrifugal force, since the sails will perform the 360° parallel to the wind, i.e. in inactive position. This possibility is essential for the optimum control of power generation when excess wind is produced. If the equipment functions to the maximum at a wind velocity of 7 m/s, a wind velocity of 21 m/s is damaging to us, for which reason it would be advisable to reduce the number of active sails to, for example, 4. In this way, high speeds would not prevent the system from functioning. It would be sufficient to activate at any time only those sails necessary for the maximum production that is of interest to us. With this possibility, stoppages due to excess wind velocity would be totally controlled, except extreme conditions.

This flexibility also serves us for the stoppage and start-up of the unit, so that mechanical start-up force would not be necessary. If we want to stop the system, the first thing would be to deactivate 9 out of the 10 sails. The shaft will continue rotating due to the centrifugal force and due to the power provided by the sail which is not deactivated, it being possible to control, without forcing the machinery, with the brakes.

To start-up, the first thing we do is activate the signal emitters that were inactive. Taking off the brake, due to the force of the sail that remained active, the shaft will rotate slowly. In this way it will perform a maximum of 90° rotation, as a rig will previously cross the horizontal receiving the activation signal from all the sails, which means that when they are situated in working position the rotation will start with normality.

The mechanism must perform the rotation in a maximum time of 12.5 and 25 hundredths of a second for 30 and 60 rpm, respectively.

Figure 2 depicts the sails (6,1) in the wind attack position and in recovery position (6,2).

### V Wind direction.

The support bar (5) anchored to two parallel masts (8) which transversally runs through the sails (6) with the sufficient separation to enable them to rotate, reaching the shaft (7) of each sail, fixing it through one of the two free quadrants, not hindering its rotation.

This figure depicts the diagram of a system designed to fix the shaft of each sail at intermediate points, in order to decrease its section and weight, as well as better supporting the force transmitted by the sails.

A support bar (5) is firmly fixed to two parallel shafts (8) transversally running through the sail shafts, with a sufficient separation so that they can perform the rotation.

The sails use two of the four quadrants of the imaginary circumference which they describe to perform their 90° rotations, the two remaining quadrants staying practically free. Through one of these, the arm which starts from the fixing bar reaches the shaft, firmly fixing it with a bearing and allowing it to rotate freely.

In the figure, the pair of sails change the position in an inverse manner, rotating in the opposite direction, to compensate the lateral wind forces in a single direction.

The left sail, to pass from the power position to the recovery position, performs a 90° rotation to the left, the right sail simultaneously performs the rotation to the right.

Once the system is thus mounted, it operates as follows: it faces the wind direction (V), this pushes the sails (6) which are above the horizontal that passes through the main shaft (1) (upper power semicircle) (3), frontally, making the main shaft rotate. When the masts (8) of each rig reach the horizontal in the part opposite the wind inlet, the mechanism situated on the fixing bar of the masts (8), makes the sails (6) quickly rotate 90° around their shaft, so that they form the stroke below the horizontal parallel to the wind (V) offering minimum resistance and being perpendicular with respect to the sails which form the upper stroke. The sails rotate 90° in pairs and in the opposite direction in order to counteract the push of the wind during the point that the rotation is produced and that would affect the masts (8) in transversal directions.

Calculation: Supposing a parallelogram formed by 10 metres width (corresponding to the length of the shaft and the fixing bar) by 10 metres length (pair of masts), gives us a result of 100 m2 of sail surface. We would place 20 sails of 10 metres in length by 0.50 metres in width. If the sails had a maximum thickness of 0.025 metres (2.5 cm) the resistance surface would be 2.5 m2, which means 2.5% of the theoretical resistance in relation to the attack surface, (the real one would be less) having been reduced by 97.50%, over the 95% previously considered as acceptable.

Once the lower semicircle delimited by the horizontal of the main shaft (recovery semicircle) has been covered, each rig crosses the horizontal facing the wind, producing the opposite rotation of the sails and covering the total part of the parallelogram's surface, therefore now being positioned perpendicular to the wind, offering it the maximum resistance.

The mechanical energy produced by the continuous rotation of the shaft is transmitted by mechanical means to the electric generator.

Measurements are not proposed as they have no limitations, depending on the wind power that one wants to collect. A shaft of 10 metres in length with masts of 10 metres would mean a wind push surface of 100 square metres for each rig. To get an idea of the power that this surface can transmit, a similar wind surface is used by a sailing boat with 16 metres in length and 20 mt of displacement for sailing.

### Installation in the sea on floating surface.

Until this point of the explanation, we have tried to improve several solutions and resolved others, but to achieve the objective considered of resolving all of them it is necessary to install it in the sea.

The main characteristic of the proposed model is fixing all its moving parts at two support points. This allows the system to perfectly support the three forces to which it is exposed: wind force, centrifugal force and inertia. The latter is what distinguishes it from its fixed installation.

We select several points, in accordance with its climatological data, in different maritime zones, the closest together, wherein the periods of the winds that are more suitable for wind production do not overlap, so that at all times we have available at least one which meets the minimum required wind velocity.

At each selected point, a relatively large, fixed and stable buoy will be installed, anchored to the seabed. The buoy and the electric grid connection will be connected by a submarine cable. A boat and a platform with navigation capacity can perform the connection/disconnection to the electric grid via the buoy simply and quickly. Thus we have made the circuit between the generator situated in the boat or platform and the electric grid.

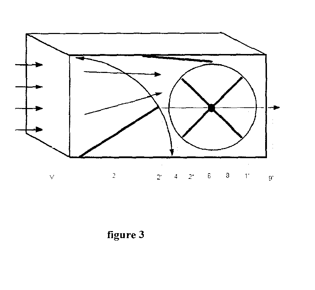

In the boat or platform we position on the deck what we will call wind acceleration tunnel (fig 3) and which we will explain below:
V wind inlet/ direction
   1 Main wind inlet/ direction shaft
   1' Imaginary horizontal which crosses the main shaft
   2 Lower collapsible ramp
   2' Arc determined by the displacement of the lower ramp
   4 Circumference which the masts describe on rotating
   2" Upper collapsible ramp
   8 Masts
   9' Wind outlet

The wind (V) enters from the front, circulating inside it. With the collapsible ramps conveniently operating (2 and 2") we can redirect the wind which circulates inside it, concentrating it in the attack semicircle, increasing the velocity on hitting against the sails which absorb all the power, transmitting it to the shaft.

The wind acceleration tunnel has the form of a 4-sided elongated regular polyhedron, with identical pairs of sides (opposite faces) and hollow inside. (Figure 3). The figure would be similar, with the exception of the measurements, to a brick. It would be placed transversally to the length of the boat or platform, so that it permits expansion in height by superimposing, and laterally depending on the boat length.

The two opposite faces, positioned at port and starboard, will be open, with the wind (V) circulating throughout the inside.

We assemble the wheel described in the previous section, at one of its lower ends, situated at port if the wind blows from the starboard.

In order to make maximum use of the surface of the boat deck or platform, with several adjacent or superimposed units, they do not rotate seeking the wind direction. It is the platform or boat which orientates them all at the same time, rotating stern over bow, which will be maintained at its point connected to the buoy.

The incoming wind, the front attack to the sails, the rotation they produce and the wind outlet, are produced in the same direction, so that several units, adjacent and superimposed, do not produce shadows or interfere with one another, which would make it compulsory to separate them, as occurs with fixed land wind generators.

The wheel described in the previous section has been given said surface measurements of 100 m2 (10m x 10m). It would cover a rectangle of 10 m base by 20 m height (diameter). We will increase this height by two further metres for the construction of the tunnel proposed. The tunnel's measurements will be:
- 42 metres in length (each face will be positioned in the port-starboard direction and therefore transversal to the length), 22 metres height and 10 metres width. The two faces with measurements 22m x 10m would be those of the wind inlet and outlet and would be positioned at port and starboard.

On the lower face of the polyhedron (base) and on its opposite face (roof) we would fix two panels or sheets anchored by the part where the wind enters and mobile at their other end by means of a controlled mechanism, by way of collapsible ramp (2 and 2''). Their normal position would be folded against the base and the roof without interfering in the wind inlet. If it is necessary to increase the wind velocity, we would displace the moving part conveniently, so that we would achieve a funnel effect aimed towards the wind attack sail surface. The moving end of the upper sheet will be at most 2 metres, the lower sheet could rotate until 90°, the tunnel inlet remaining closed.

In this way, we increase the wind strength on causing greater pressure differential in the tunnel inlet-outlet.

Thus, according to the proposed measurements, we are concentrating, at a certain time, the inlet air mass (22m x 10m) on an outlet surface of 10m x 10m.

Having performed the practical test on an equivalent scale, we get the following results:
- Inlet velocity of 2m/s offers an outlet velocity of 3.2m/s.
- Inlet velocity of 4 m/s offers an outlet velocity of6.5m/s.

This involves acting on the wind velocity, increasing it by 60% which involves:
Considerably reducing the equipment start-up velocity.
Transforming the minimum start-up velocity in optimum.
Although this would be a main objective, the tunnel also has other obj ectives:
   - It eliminates the interferences of the wind on adjacent or upper wheels.
   - It permits insulating each unit, so that the maintenance and faults of one unit do not affect the rest.
   - It protects from extreme situations of wind, rain and sun which deteriorate the system.

The proposed system transforms wind energy into mechanical energy and this into electricity. Regardless of how much we manage to reduce the minimum start-up velocity, minimum wind activity is necessary. Situations of total calm will be insurmountable. This problem can only be resolved by the mobility of the installation.

If, we have previously selected two points due to their climatological conditions, A and B, in which we know that the winds will not overlap in time, having optimum wind speeds between the two at any time of the year, the solution is to displace the boat or platform from A to B or from B to A, as convenient. With a quick and simple connecting system of the buoys previously installed at those selected points, we would have overcome the problem for reasonable periods of calm at one of the points.

At a velocity of 16 knots, 30 km/hour, with A being situated at a distance of 300 km from B, the platform would be operative in the latter at 12 midday.

## Claims

1. Industrial-scale wind-energy collection system which can be installed in the sea, **characterized in that** it consists of a main shaft (1), raised at its ends by two supports (S), from which several rigs extend, each one comprising two parallel masts (8), connected at the ends thereof by a crossbar or fixing bar (5). The resulting parallelogram in each rig forms the sail surface, which is divided into various sails (6), each sail being supported by a shaft (7) that can rotate through 90°, anchored at its ends to the main shaft and to the fixing bar. These rotations of the sail (6) shafts occur every time a shaft crosses the horizontal determined by the main shaft, i.e. twice each complete rotation. In order to divide the distance between the two support points of the shaft of each sail, of a support bar which joins each pair of masts, the shafts of the sails running transversally and separated by sufficient distance, several arms extend which reach the shaft or each sail, firmly fixing it, without checking its rotation.

2. Industrial-scale wind-energy collection system which can be installed in the sea, according to claim 1, **characterized in that** it is embedded in a regular polyhedron, by way of a tunnel, provided with collapsible ramps (2 and 2").

3. Industrial-scale wind-energy collection system which can be installed in the sea, according to claims 1 and 2, **characterized in that** it supports the three forces to which it is subjected: wind, centrifugal and inertia, exclusively designed for installation in the marine environment on a floating mobile platform.
